# EUROPEAN PATENT SPECIFICATION

(11) **EP 2 343 687 B1**
(45) Date of publication and mention of the grant of the patent: **23.10.2019**
(21) Application number: 10197077.0
(22) Date of filing: 27.12.2010
(51) Int. Cl.: G06T 19/00, G06T 15/08

(54) **Tomographic image generating apparatus, tomographic image generating method, and program for generating tomographic images**
Tomographiebilderzeugungsvorrichtung, Tomographiebilderzeugungsverfahren und Programm zur Erzeugung tomographischer Bilder
Appareil de génération d'image tomographique, procédé de génération d'image tomographique et programme de génération d'images tomographiques

(30) Priority: 12.01.2010 JP 2010004307
(43) Date of publication of application: 13.07.2011
(73) Proprietor: Fujifilm Corporation, Minato-ku Tokyo 106-8620 (JP)
(72) Inventor: Ihara, Satoshi, Tokyo 107-0052 (JP)
(74) Representative: Klunker IP Patentanwälte PartG mbB

(56) References cited:
- JP-A- 2009 207 727
- TSCHIRREN J ET AL: "INTRATHORACIC AIRWAY TREES: SEGMENTATION AND AIRWAY MORPHOLOGY ANALYSIS FROM LOW-DOSE CT SCANS", IEEE TRANSACTIONS ON MEDICAL IMAGING, IEEE SERVICE CENTER, PISCATAWAY, NJ, US, vol. 24, no. 12, 1 December 2005 (2005-12-01), pages 1529-1539, XP001240683, ISSN: 0278-0062, DOI: 10.1109/TMI.2005.857654
- KANITSAR A ET AL: "CPR - curved planar reformation", VIS 2002. IEEE VISUALIZATION 2002. PROCEEDINGS. BOSTON, MA, OCT. 27 - NOV. 1, 2002; [ANNUAL IEEE CONFERENCE ON VISUALIZATION], NEW YORK, NY : IEEE, US, 1 November 2002 (2002-11-01), pages 37-44, XP031212945, ISBN: 978-0-7803-7498-0

## Description

### BACKGROUND OF THE INVENTION

### Field of the Invention:

The present invention relates to a tomographic image generating apparatus according to the preamble of claim 1, a tomographic image generating method, and a program for acquiring predetermined sectional shapes of an organ having a linear structure whose direction is generally determined anatomically.

### Description of the Related Art:

Heretofore, it has been customary for doctors to display axial sections of spinal cords for diagnosis and clinical examination. There has been a technology for detecting a spinal cord with axial sections thereof and determining the central lines of vertebrae, as disclosed in Japanese Laid-Open Patent Publication No. 2009-207727.

People with a spinal curvature may have their spinal cord and axial sections thereof not perpendicular to each other. Consequently, desired tomographic images of the spinal cords of those people may not be acquired. The technology disclosed in Japanese Laid-Open Patent Publication No. 2009-207727 is premised on the axial sections of a substantially straight spinal cord, and fails to detect a spinal cord accurately from tomographic images along axial sections if the spinal cord suffers a large curvature.

In accordance with the preamble of claim 1,
TSCHIRREN J ET AL: "INTRATHORACIC AIRWAY TREES: SEGMENTATION AND AIRWAY MORPHOLOGY ANALYSIS FROM LOW-DOSE CT SCANS", IEEE TRANSACTIONS ON MEDICAL IMAGING, IEEE SERVICE CENTER, PISCATAWAY, NJ, US, vol. 24, no.12 1 December 2005 (2005-12-01), pages 1529-1539, XP001240683, ISSN: 0278-0062, DOI: 10.1109/TMI.2005.857654 discloses a tomographic image generating apparatus in which the curve generator generates a rough skeletonization as an approximate curve. Specifically, voxel data are processed by a tree segmentation process by making use of cylindrical regions of interest. Said first curve as an approximate curve is obtained by first computing a distance map of the segmentation result, followed by a graph search using centres of gravities.

### SUMMARY OF THE INVENTION

It is an object of the present invention to provide a tomographic image generating apparatus, a tomographic image generating method, and a program for generating desired tomographic images of an organ having a predetermined linear structure.

The invention is set out in the appended claims.

The above and other objects, features, and advantages of the present invention will become more apparent from the following description when taken in conjunction with the accompanying drawings in which preferred embodiments of the present invention are shown by way of illustrative example.

### BRIEF DESCRIPTION OF THE DRAWINGS

FIG. 1 is an electric block diagram of a tomographic image generating apparatus according to an embodiment of the present invention;
FIG. 2 is a flowchart of an operation sequence of the tomographic image generating apparatus;
FIG. 3 is a diagram showing by way of example a spinal cord in a three-dimensional medical image acquired in step S1 of the flowchart shown in FIG. 2;
FIG. 4 is a diagram showing the positions of sectional shapes of the spinal cord shown in FIG. 3 which are detected by a first detector of the tomographic image generating apparatus;
FIG. 5 is a diagram showing a first curve generated and plotted over the spinal cord shown in FIG. 4;
FIG. 6 is a diagram showing the directions and positions of planes along which a plurality of second tomographic images are generated from the three-dimensional medical image;
FIG. 7 is a diagram showing a three-dimensional image generated to make the first curve straight and the positions of the second tomographic images; and
FIG. 8 is a diagram showing the positions of sectional shapes of the spinal cord which are detected by a second detector of the tomographic image generating apparatus.

### DESCRIPTION OF THE PREFERRED EMBODIMENTS

A tomographic image generating apparatus according to preferred embodiments of the present invention will be described in detail below with reference to the accompanying drawings.

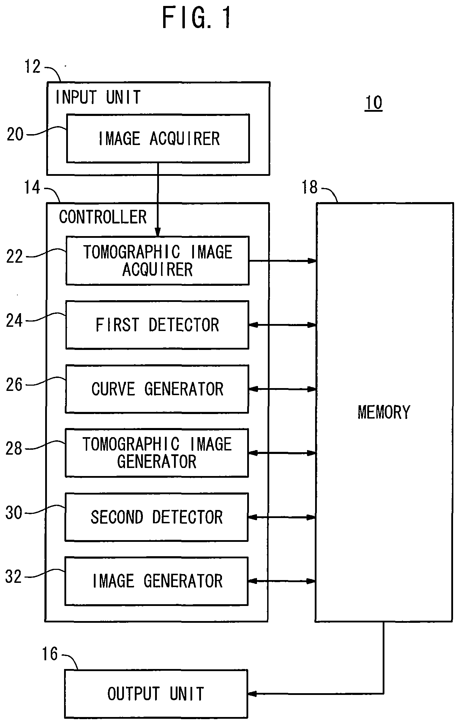

FIG. 1 is an electric block diagram of a tomographic image generating apparatus 10 according to an embodiment of the present invention. As shown in FIG. 1, the tomographic image generating apparatus 10 comprises an input unit 12, a controller 14 as an information processor such as a CPU or the like, an output unit 16, and a memory 18 as a recording medium. The memory 18 stores a program for performing the functions of the tomographic image generating apparatus 10. The input unit 12 receives signals from external. The input unit 12 includes an image acquirer 20 for acquiring a three-dimensional medical image which includes a spinal cord. The image acquirer 20 may acquire not only a medical image such as a CT image, an MRI image, an RI image, a PET image, or an X-ray image, but also a three-dimensional image, an artificially generated three-dimensional image, or a two-dimensional or three-dimensional medical image. A three-dimensional image that is generated, to be described later, is included in the concept of three-dimensional medical images.

The controller 14 includes a tomographic image acquirer 22, a first detector 24, a curve generator 26, a tomographic image generator 28, a second detector 30, and an image generator 32.

The tomographic image acquirer 22 generates and acquires a plurality of first tomographic images representing sections, e.g., axial sections, perpendicular to a given direction, from a three-dimensional medical image including a spinal cord which has been acquired by the image acquirer 20. The tomographic image acquirer 22 records the acquired first tomographic images in the memory 18. If the image acquirer 20 has directly acquired a plurality of first tomographic images representing axial sections of a three-dimensional medical image including a spinal cord, then the tomographic image acquirer 22 acquires the first tomographic images from the image acquirer 20 and records them unprocessed in the memory 18.

The first detector 24 detects sectional shapes of the spinal cord that are included respectively in the first tomographic images acquired by the tomographic image acquirer 22. The first detector 24 detects positions where the sectional shapes of the spinal cord are in full conformity with, or in conformity at a level higher than a predetermined value with, given sectional shapes of the spinal cord. Therefore, even if the sectional shapes of the spinal cord included in the first tomographic images are not in full conformity with the given sectional shapes of the spinal cord, they are detected by the first detector 24 provided they are similar to the given sectional shapes within a predetermined range. According to the present embodiment, sectional shapes of a spinal cord which lies perpendicularly to an axial plane are used as given sectional shapes of the spinal cord.

The first detector 24 detects the positions in the first tomographic images of the sectional shapes of the spinal cord for the respective first tomographic images. For some first tomographic images, the first detector 24 may not detect the positions in those first tomographic images of the sectional shapes of the spinal cord. The first detector 24 records the detected positions of the sectional shapes of the spinal cord in the memory 18. The first detector 24 may detect the sectional shapes of the spinal cord according to a template matching method, a demarcation method, or a learning method based on AdaBoost which is an algorithm for integrated machine learning.

The curve generator 26 generates a curve approximating the detected positions of the sectional shapes of the spinal cord by interpolating the detected positions of the sectional shapes of the spinal cord. Specifically, the curve generator 26 generates a curve according to spline interpolation, a method of least squares, or the like. The curve generator 26 records the generated curve in the memory 18.

The tomographic image generator 28 generates a plurality of tomographic images perpendicular to the curve from the three-dimensional medical image or a three-dimensional image that is generated, to be described later, and records the tomographic images in the memory 18. Specifically, the tomographic image generator 28 generates a plurality of tomographic images perpendicular to the curve spaced at predetermined intervals along the curve generated by the curve generator 26, from the three-dimensional medical image or the three-dimensional image that is generated.

The second detector 30 detects sectional shapes of the spinal cord which are included in the tomographic images generated by the tomographic image generator 28. The second detector 30 detects positions where the sectional shapes of the spinal cord are in full conformity with, or in conformity at a level higher than a predetermined value with, given sectional shapes of the spinal cord. Therefore, even if the sectional shapes of the spinal cord included in the tomographic images are not in full conformity with the given sectional shapes of the spinal cord, they are detected by the second detector 30 provided they are similar to the given sectional shapes within a predetermined range. According to the present embodiment, sectional shapes of a spinal cord which lies perpendicularly to the tomographic images are used as given sectional shapes of the spinal cord. The second detector 30 may detect the sectional shapes of the spinal cord according to a template matching method, a demarcation method, or a learning method based on AdaBoost which is an algorithm for integrated machine learning. The second detector 30 records the detected positions of the sectional shapes of the spinal cord in the memory 18.

The image generator 32 generates a three-dimensional image to make the curve generated by the curve generator 26 straight by interpolating the tomographic images generated most recently by the tomographic image generator 28, and records the generated three-dimensional image in the memory 18. Specifically, the image generator 32 generates a three-dimensional image by superposing the tomographic images spaced at the predetermined intervals referred to above so as to arrange the points of intersection between the tomographic images and the curve along a straight line, and interpolating the tomographic images.

The output unit 16 outputs the tomographic images perpendicular to the curve which are generated by the tomographic image generator 28 and the positions of the sectional shapes of the spinal cord detected by the second detector 30 at the respective tomographic images, to external. The output unit 16 may output only either the tomographic images perpendicular to the curve or the positions of the sectional shapes of the spinal cord.

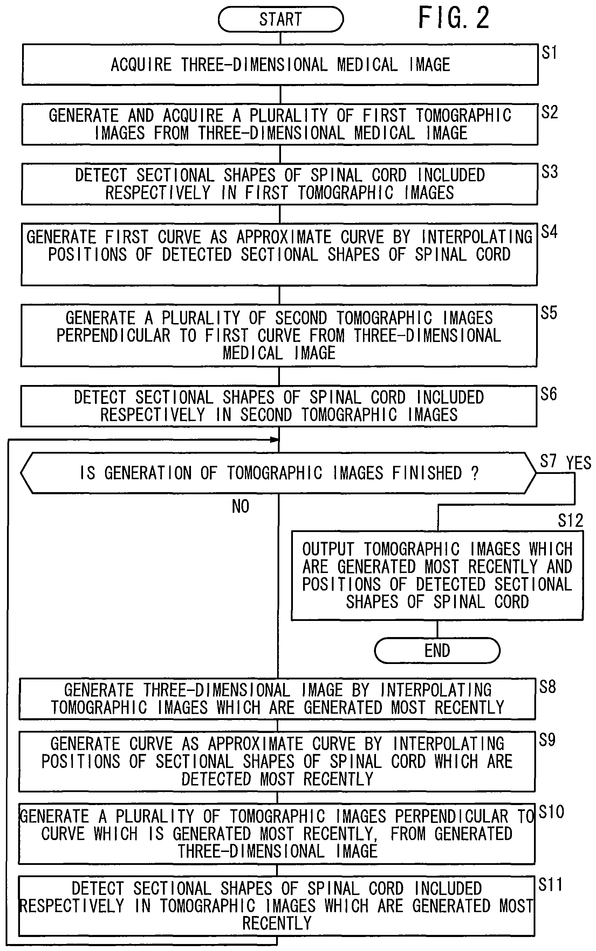

Operation of the tomographic image generating apparatus 10 will be described below with reference to a flowchart shown in FIG. 2.

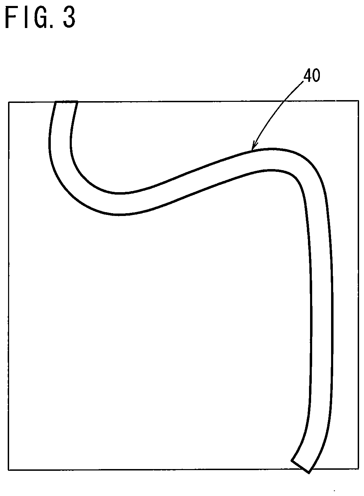

The image acquirer 20 acquires a three-dimensional medical image including a spinal cord in step S1. FIG. 3 is a diagram showing by way of example a spinal cord 40 in the three-dimensional medical image acquired in step S1 of the flowchart shown in FIG. 2. It can be seen from FIG. 3 that the spinal cord 40 is curved. In the present embodiment, a three-dimensional image is plotted as a two-dimensional image for illustrative purposes. FIG. 3 shows a section perpendicular to axial sections, i.e., a section of a human body parallel to the body axis.

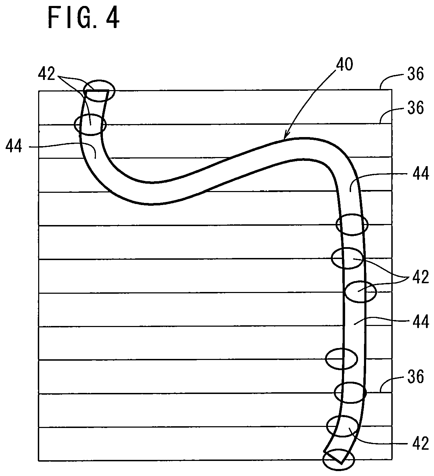

Then, the tomographic image acquirer 22 generates and acquires a plurality of first tomographic images 36 (see FIG. 4) representing axial sections, perpendicular to the body axis, from the acquired three-dimensional medical image in step S2. If the image acquirer 20 has acquired a plurality of first tomographic images representing axial sections of a three-dimensional medical image including a spinal cord, then the tomographic image acquirer 22 acquires the first tomographic images from the image acquirer 20.

The first detector 24 detects sectional shapes of the spinal cord 40 that are included respectively in the first tomographic images in step S3. The first detector 24 detects sectional shapes of the spinal cord 40 that lies perpendicularly to the axial sections. However, the first detector 24 may detect given sectional shapes of the spinal cord 40.

FIG. 4 shows positions 42 of the sectional shapes of the spinal cord 40 which have been detected by the first detector 24. In FIG. 4, the spinal cord 40 is indicated by thick lines, the positions of the first tomographic images 36 as axial sections acquired in step S2 by horizontal lines, and the positions 42 of the sectional shapes of the spinal cord 40 which have been detected by the first detector 24 by circles. As shown in FIG. 4, some of the first tomographic images 36 include portions 44 of the spinal cord 40 which do not lie perpendicularly to the axial plane, where sectional shapes of the spinal cord 40 are not detected. Though the spinal cord 40 may be seen as being perpendicular to the axial plane in the two-dimensional image shown in FIG. 4, the spinal cord 40 may include portions which do not lie perpendicularly to the axial plane in a three-dimensional image.

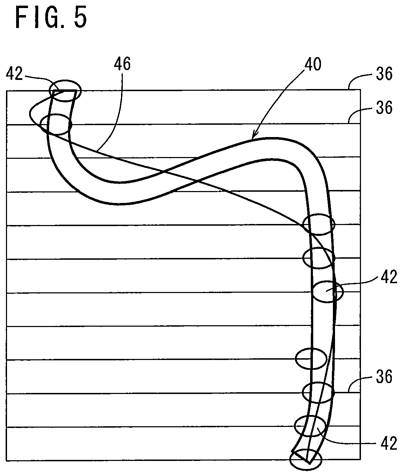

Then, the curve generator 26 generates a first curve 46 (see FIG. 5) approximating the positions of the detected sectional shapes of the spinal cord 40 by interpolating the positions of the detected sectional shapes of the spinal cord 40 in step S4. FIG. 5 shows the generated first curve 46 plotted over the spinal cord 40 shown in FIG. 4.

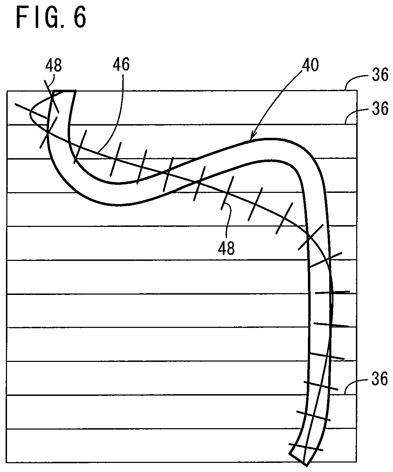

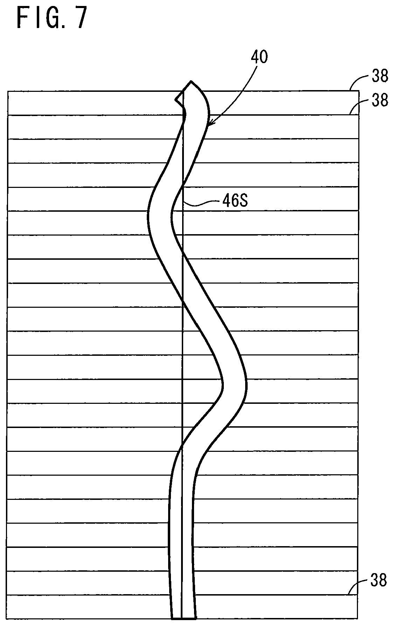

In step S5, the tomographic image generator 28 generates a plurality of second tomographic images 38 (see FIG. 7) perpendicular to the first curve 46 from the three-dimensional medical image acquired in step S1. Specifically, the tomographic image generator 28 generates a plurality of second tomographic images 38 perpendicular to the first curve 46 spaced at predetermined intervals along the first curve 46 from the three-dimensional medical image. FIG. 6 shows the directions and positions of planes along which the second tomographic images 38 are generated from the three-dimensional medical image. The directions and positions of planes along which the second tomographic images 38 are generated are indicated by lines 48 which extend perpendicularly to the first curve 46.

If the generated second tomographic images 38 are superposed such that the first curve 46 becomes a straight line 46S (see FIG. 7), i.e., if the second tomographic images 38 are superposed and spaced at the predetermined intervals such that the points of intersection between the second tomographic images 38 and the first curve 46 are arranged along the straight line 46S, then the second tomographic images 38 are plotted as shown in FIG. 7. Since the spinal cord 40 represented by the second tomographic images 38 is more substantially perpendicular to the sectional planes of the tomographic images than the spinal cord 40 represented by the first tomographic images 36, the second tomographic images 38 provide more desired sectional shapes of the spinal cord 40 than the first tomographic images 36. In FIG. 7, the positions of the second tomographic images 38 are indicated by horizontal lines. Although no image exists between adjacent ones of the second tomographic images 38, the spinal cord 40 plotted when the first curve 46 is converted into the straight line 46S is indicated by thick lines.

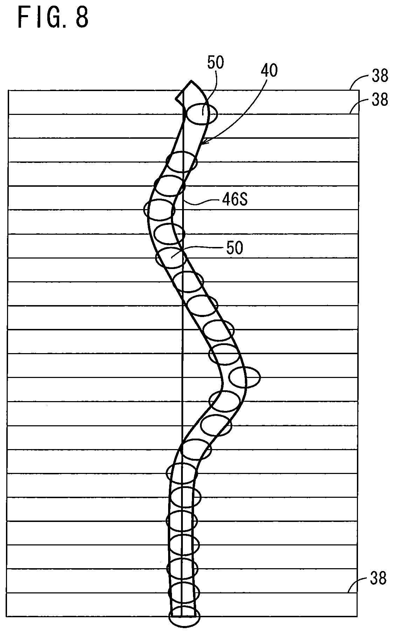

Then, the second detector 30 detects sectional shapes of the spinal cord 40 which are included in the respective second tomographic images 38 in step S6. FIG. 8 shows positions 50 of the sectional shapes of the spinal cord 40 which have been detected by the second detector 30, the positions 50 being indicated by circles. A comparison between FIG. 5 and FIG. 8 indicates that since the spinal cord 40 represented by the second tomographic images 38 is more substantially perpendicular to the sectional planes of the tomographic images than the spinal cord 40 represented by the first tomographic images 36, the second detector 30 can detect more sectional shapes of the spinal cord 40. Therefore, sectional shapes of the spinal cord 40 can be detected with higher accuracy.

Then, the controller 14 determines whether the generation of tomographic images is to be finished or not in step S7. The controller 14 may judge that the generation of tomographic images is to be finished if the ratio of the number of detected sectional shapes of the spinal cord 40 to the number of second tomographic images 38 each including the spinal cord 40 is greater than a predetermined ratio, or if the number of detected positions 50 of the spinal cord 40 is greater than a predetermined number. Alternatively, the controller 14 may determine whether the generation of tomographic images is to be finished or not based on an operation of a command input unit, not shown, by the user, or based on whether a process ranging from step S8 to step S11 has been repeated a predetermined number of times or not.

If the controller 14 judges that the generation of tomographic images is not to be finished in step S7, then the image generator 32 generates, in step S8, a three-dimensional image to make the first curve 46 straight by interpolating the second tomographic images 38 which have been generated most recently in step S5. Specifically, the image generator 32 generates a three-dimensional image by superposing the second tomographic images 38 spaced at the predetermined intervals so as to arrange the points of intersection between the second tomographic images 38 and the generated curve along a straight line, and interpolating the second tomographic images 38. The generated three-dimensional image includes the spinal cord 40 as shown in FIG. 7. The tomographic images interpolated in step S8 in subsequent cycles are tomographic images that are generated most recently in step S10 to be described later. The image generator 32 may generate a three-dimensional image of the spinal cord from the images of the spinal cord regions in the second tomographic images 38.

In the above description, a three-dimensional image is generated by interpolating the second tomographic images 38. However, if the predetermined intervals at which the second tomographic images 38 are generated in step S5 are shortened, then it is possible to generate a three-dimensional image by superposing the generated second tomographic images 38 so as to make the first curve 46 straight, without the need for the interpolation of the second tomographic images 38.

Then, the curve generator 26 generates a second curve approximating the positions of the detected sectional shapes of the spinal cord 40 by interpolating the positions of the sectional shapes, included respectively in the second tomographic images 38, detected most recently by the second detector 30 in step S6, with the second tomographic images 38 being superposed so as to convert the first curve 46 into the straight line 46S, in step S9. In other words, the curve generator 26 generates a second curve by interpolating the positions 50, shown in FIG. 8, of the sectional shapes of the spinal cord 40 which have been detected by the second detector 30.

Then, in step S10, the tomographic image generator 28 generates a plurality of third tomographic images perpendicular to the second curve from the three-dimensional image generated most recently in step S8. Specifically, the tomographic image generator 28 generates a plurality of third tomographic images perpendicular to the second curve spaced at predetermined intervals along the second curve from the three-dimensional image.

Then, the second detector 30 detects sectional shapes of the spinal cord 40 which are included respectively in the third tomographic images in step S11. Thereafter, control goes back to step S7. Steps S7 through S11 are repeated to increase the ratio of the number of tomographic images having desired sectional shapes of the spinal cord 40 to the number of tomographic images including the spinal cord 40. In other words, the ratio of the number of detected sectional shapes of the spinal cord to the number of tomographic images including the spinal cord 40 is increased by repeating steps S7 through S11.

If the controller 14 judges that the generation of tomographic images is to be finished in step S7, then the output unit 16 outputs the tomographic images generated most recently and the positions of the detected sectional shapes of the spinal cord 40 to external in step S12. The output unit 16 may extract and output images of the tomographic images which are positioned within a predetermined range from the positions of the detected sectional shapes. Alternatively, the output unit 16 may output tomographic images generated not most recently and the positions of the detected sectional shapes to an external circuit, or may output the three-dimensional image that is generated. The output unit 16 may output either the tomographic images or the positions of the detected sectional shapes. The output unit 16 may output the tomographic images to a display device, not shown, so that the display device can display the tomographic images.

The process ranging from step 8 to step S11 serves to extend the displayed image of a spinal cord, which is shown as curved even when corrected, into a straight image and to detect sectional shapes of the spinal cord, by repeating a process similar to the process ranging from step S4 through S6 when sectional shapes of the spinal cord 40 are not sufficiently detected by the process ranging from step S4 through S6.

### Modifications:

The above embodiment of the present invention may be modified as follows:
(1) In step S8 shown in FIG. 2, the image generator 32 may generate a three-dimensional image by correcting the three-dimensional medical image acquired in step S1 so as to make the first curve 46 straight. In other words, the image generator 32 may generate the three-dimensional image shown in FIG. 7 by correcting the three-dimensional medical image shown in FIG. 5. In step S8 in a next cycle, the image generator 32 generates a new three-dimensional image by correcting the previously generated three-dimensional image. Furthermore, the image generator 32 may generate a three-dimensional image with the first curve 46 corrected into the straight line 46S by generating the first curve 46 and a plurality of CPR (Curved Planar Reformation) images (curved tomographic images) along curves parallel to the first curve 46 at certain distances therefrom.
(2) After having generated the first curve 46 in step S4, the image generator 32 may generate a three-dimensional image by correcting the three-dimensional medical image acquired in step S1 so as to convert the first curve 46 into the straight line 46S, and then control may go to step S5. In this case, in step S5, the tomographic image generator 28 generates a plurality of second tomographic images 38 perpendicular to the straight line 46S from the three-dimensional image which is produced by correcting the three-dimensional medical image. Specifically, the tomographic image generator 28 generates a plurality of second tomographic images 38 perpendicular to the straight line 46S spaced at predetermined intervals along the straight line 46S, from the three-dimensional image shown in FIG. 7. In this case, step S8 is not required. The three-dimensional image with the first curve corrected into the straight line may be generated by generating the first curve 46 and a plurality of CPR images which are parallel to the first curve 46.
   After the curve generator 26 has generated the second curve in step S9, the image generator 32 generates a new three-dimensional medical image with the second curve corrected into a straight line from the three-dimensional image with the first curve 46 corrected into the straight line, and then control goes to step S10. In this case, in step S10, the tomographic image generator 28 may generate a plurality of third tomographic images perpendicular to the straight line from the three-dimensional image produced by the most recent correction.
(3) In the above embodiment, the spinal cord 40 is described as an example of an organ having a predetermined linear structure. Alternatively, an organ having a predetermined linear structure may be a spine, a large artery, a large vein, a trachea, or the like. Since the spinal cord 40 is described as an organ having a linear structure, the first tomographic images 36 are representative of axial sections. However, different organs of a linear structure have sections in different directions. In other words, with respect to an organ having a predetermined linear structure whose direction is generally determined anatomically, the first tomographic images 36 are representative of sections perpendicular to a certain fixed direction.
(4) In the above embodiment, the output unit 16 outputs tomographic images, etc. only when the generation of tomographic images is finished. However, the output unit 16 may output tomographic images, etc. each time the tomographic image generator 28 generates a plurality of tomographic images or when the user instructs the output unit 16 to output tomographic images, etc. For example, the output unit 16 may output tomographic images, etc. immediately after step S5 or step S6 and/or immediately after step S10 or step S11.
(5) In the above embodiment, after step S6, control goes to step S7 to determine whether the generation of tomographic images is to be finished or not, and if the generation of tomographic images is to be finished, then control goes to step S12. However, after step S6, control may directly go to step S12.
(6) The modifications (1) through (5) may be combined in any way insofar as their combinations do not lack consistency.

## Claims

1. A tomographic image generating apparatus (10) comprising:
a tomographic image acquirer (22) adapted to acquire a plurality of first tomographic images (36) perpendicular to a predetermined direction from a three-dimensional medical image including a spinal cord (40) having a predetermined linear structure;
a first detector (24) adapted to detect sectional shapes of the spinal cord (40) which are included respectively in the first tomographic images (36);
a curve generator (26) adapted to generate a first curve (46) as an approximate curve; and
a tomographic image generator (28) adapted to generate a plurality of second tomographic images (38) perpendicular to the first curve (46) from the three-dimensional medical image,
**characterized in that**
said curve generator (26) is adapted to generate the first curve by interpolating respective positions (42) of the detected sectional shapes of the spinal cord (40), that an image generator (32) is provided, adapted to generate a three-dimensional image such that the first curve (46) becomes a straight line (46S) by superimposing second tomographic images by arranging the points of intersection between the second tomographic images (38) and the first curve along the straight line, that
a second detector (30) is provided, adapted to detect the sectional shapes of the spinal cord (40) which are included respectively in the second tomographic images (38), that a controller (14) is provided, which carries out an iterative process in which it determines whether or not generation of tomographic images is to be finished and, if not, causes the image generator (32) to generate a three-dimensional image by interpolating tomographic images which are generated most recently, the curve generator generates an approximate curve by interpolating positions of sectional shapes of the spinal cord which are detected most recently, the tomographic image generator generates a plurality of tomographic images perpendicular to the approximate curve generated most recently and the second detector (30) detects sectional shapes of the spinal cord included respectively in tomographic images which are generated most recently, and returns to the first step of the iterative process.

2. A method of generating, with a computer, tomographic images of a spinal cord (40) having a predetermined linear structure which is included in a three-dimensional medical image, comprising the steps of:
acquiring a plurality of first tomographic images (36) perpendicular to a predetermined direction from the three-dimensional medical image;
detecting sectional shapes of the spinal cord (40) which are included respectively in the first tomographic images (36);
generating a first curve (46) as an approximate curve by interpolating respective positions of the detected sectional shapes of the spinal cord (40); and
generating a plurality of second tomographic images (38) perpendicular to the first curve (46) from the three-dimensional medical image **characterized by**
generating the first curve by interpolating respective positions (42) of the detected sectional shapes of the spinal cord (40),
generating by an image generator a three-dimensional image such that the first curve (46) becomes a straight line by superimposing second tomographic images so as to arrange the points of intersection between the second tomographic images and the first curve along a straight line; detecting the sectional shapes of the spinal cord (40) which are included in the second tomographic images;
carries out the iterative process which includes the steps of:
determining whether or not generation of tomographic images is to be finished, if the generation of tomographic images is not to be finished, the image generator (32) generates a three-dimensional image by interpolating tomographic images generated most recently;
generating an approximate curve by interpolating positions of sectional shapes of the spinal cord detected most recently;
generating a plurality of tomographic images perpendicular to the curve which is generated most recently;
detecting sectional shapes of the spinal cord included respectively in tomographic images generated most recently; and
returns to the first step of the iterative process.

3. A computer program product when executed carries out all the steps of claim 2.

## Patentansprüche

1. Tomographiebild-Erzeugungsvorrichtung (10), umfassend:
einen Tomographiebilderfasser (22), ausgebildet zum Erfassen mehrerer erster Tomographiebilder (36) rechtwinklig zu einer vorbestimmten Richtung aus einem dreidimensionalen medizinischen Bild, das ein Rückenmark (40) mit einer vorbestimmten linearen Struktur enthält;
einen ersten Detektor (24), ausgebildet zum Nachweisen von Querschnittformen des Rückenmarks (40), die jeweils in den ersten Tomographiebildern (36) enthalten sind;
einen Kurvengenerator (26), ausgebildet zum Erzeugen einer ersten Kurve (46) als Annäherungskurve; und
einen Tomographiebildgenerator (28), ausgebildet zum Generieren mehrerer zweiter Tomographiebilder (38) rechtwinklig zu der ersten Kurve (46) aus dem dreidimensionalen medizinischen Bild,
**dadurch gekennzeichnet, dass**
der Kurvengenerator (26) ausgebildet ist zum Erzeugen der ersten Kurve durch Interpolieren jeweiliger Positionen (42) der nachgewiesenen Querschnittsformen des Rückenmarks (40), dass ein Bildgenerator (32) vorgesehen ist, ausgebildet zum Erzeugen eines dreidimensionalen Bilds derart, dass die erste Kurve (46) zu einer Geraden (46S) wird, indem zweite Tomographiebilder überlagert werden durch Anordnen der Punkte der Kreuzung zwischen den zweiten Tomographiebildern (38) und der ersten Kurve entlang der Geraden, dass
ein zweiter Detektor (30) vorgesehen ist, ausgebildet zum Nachweisen der Querschnittsformen des Rückenmarks (40), die jeweils in den zweiten Tomographiebildern (38) enthalten sind,
dass eine Steuerung (14) vorgesehen ist, die einen iterativen Prozess ausführt, in welchem sie bestimmt, ob die Erzeugung von Tomographiebildern abzuschließen ist oder nicht, und, falls nicht, den Bildgenerator (32) veranlasst, ein dreidimensionales Bild zu erzeugen durch Interpolieren von Tomographiebildern, die als letztes erzeugt wurden, wobei der Kurvengenerator eine Annäherungskurve erzeugt durch Interpolieren von Positionen von Querschnittsformen des Rückenmarks, die als letztes nachgewiesen wurden, wobei der Tomographiebildgenerator mehrere Tomographiebilder rechtwinklig zu der zuletzt erzeugten Annäherungskurve erzeugt, und der zweite Detektor (30) Querschnittsformen des Rückenmarks nachweist, die in Tomographiebildern enthalten sind, die zuletzt erzeugt wurden, und zu dem ersten Schritt des iterativen Prozesses zurückkehrt.

2. Verfahren zum Erzeugen von Tomographiebildern eines Rückenmarks mit einem Computer, wobei das Rückenmark eine vorbestimmte lineare Struktur aufweist, die in einem dreidimensionalen medizinischen Bild enthalten ist, umfassend folgende Schritte:
Erfassen mehrerer erster Tomographiebilder (36) rechtwinklig zu einer vorbestimmten Richtung aus dem dreidimensionalen medizinischen Bild;
Nachweisen von Querschnittsformen des Rückenmarks (40), die in den ersten Tomograpiebildern (36) enthalten sind;
Erzeugen einer ersten Kurve (46) als eine Annäherungskurve durch Interpolieren jeweiliger Positionen der nachgewiesenen Querschnittsformen des Rückenmarks (40); und
Erzeugen mehrerer zweiter Tomographiebilder (38) rechtwinklig zu der ersten Kurve (46) aus dem dreidimensionalen medizinischen Bild, **gekennzeichnet durch**:
Erzeugen der ersten Kurve durch Interpolieren jeweiliger Positionen (42) der nachgewiesenen Querschnittsformen des Rückenmarks (40),
- mittels eines Bildgenerators - Erzeugen eines dreidimensionalen Bilds derart, dass die erste Kurve (46) zu einer Geraden wird, indem zweite Tomographiebilder überlagert werden derart, dass die Kreuzungspunkte zwischen den zweiten Tomographiebildern und der ersten Kurve entlang einer Geraden angeordnet sind,
Nachweisen der Querschnittsformen des Rückenmarks (40), die in den zweiten Tomographiebildern enthalten sind;
Ausführen des iterativen Prozesses, welcher folgende Schritte enthält:
Bestimmen, ob die Erzeugung von Tomographiebildern abzuschließen ist oder nicht, falls die Erzeugung von Tomographiebildern nicht zu beenden ist, der Bildgenerator (32) ein dreidimensionales Bild durch Interpolieren von als letztes erzeugten Tomographiebildern erzeugt;
Erzeugen einer Annäherungskurve durch INterpolieren von Positionen von Querschnittsformen des Rückenmarks, die als letztes nachgewiesen wurden;
Erzeugen mehrerer Tomographiebilder rechtwinklig zu der Kurve, die zuletzt erzeugt wurde;
Nachweisen von Querschnittsformen des Rückenmarks, die in den zuletzt erzeugten Tomographiebildern enthalten sind; und
Zurückkehren zu dem ersten Schritt des iterativen Prozesses.

3. Computerprogrammprodukt, das sämtliche Schritte des Anspruchs 2 ausführt.

## Revendications

1. Appareil de génération d'images tomographiques (10) comprenant :
une unité d'acquisition d'images tomographiques (22) conçue pour acquérir une pluralité de premières images tomographiques (36) perpendiculaires à une direction prédéterminée à partir d'une image médicale tridimensionnelle incluant une moelle épinière (40) possédant une structure linéaire prédéterminée ;
un premier détecteur (24) conçu pour détecter des formes en coupe de la moelle épinière (40) qui sont incluses respectivement dans les premières images tomographiques (36) ;
un générateur de courbe (26) conçu pour produire une première courbe (46) en tant que courbe approchée ; et
un générateur d'images tomographiques (28) conçu pour produire une pluralité de secondes images tomographiques (38) perpendiculaires à la première courbe (46) à partir de l'image médicale tridimensionnelle,
**caractérisé en ce que** :
ledit générateur de courbe (26) est conçu pour produire la première courbe par interpolation de positions respectives (42) des formes en coupe détectées de la moelle épinière (40),
**en ce qu'**est mis en place un générateur d'images (32) conçu pour produire une image tridimensionnelle de manière que la première courbe (46) devienne une droite (46S) par superposition de secondes images tomographiques en disposant les points d'intersection entre les secondes images tomographiques (38) et la première courbe le long de la droite,
**en ce qu'**est mis en place un second détecteur (30) conçu pour détecter les formes en coupe de la moelle épinière (40) qui sont incluses respectivement dans les secondes images tomographiques (38),
**en ce qu'**est mise en place une unité de commande (14) qui exécute un processus itératif dans lequel elle détermine si la génération d'images tomographiques doit ou non être terminée, et dans la négative, fait produire au générateur d'image (32) une image tridimensionnelle par interpolation d'images tomographiques qui ont été produites le plus récemment, le générateur de courbe produit une courbe approchée par interpolation de positions de formes en coupe de la moelle épinière qui ont été détectées le plus récemment, le générateur d'images tomographiques produit une pluralité d'images tomographiques perpendiculaires à la courbe approchée produite le plus récemment et le second détecteur (30) détecte des formes en coupe de la moelle épinière incluses respectivement dans des images tomographiques qui ont été produites le plus récemment, et retourne à la première étape du processus itératif.

2. Procédé de génération, avec un ordinateur, d'images tomographiques d'une moelle épinière (40) possédant une structure linéaire prédéterminée qui est incluse dans une image médicale tridimensionnelle, comprenant les étapes consistant à :
acquérir une pluralité de premières images tomographiques (36) perpendiculaires à une première direction à partir de l'image médicale tridimensionnelle ;
détecter des formes en coupe de la moelle épinière (40) qui sont incluses respectivement dans les premières images tomographiques (36) ;
produire une première courbe (46) en tant que courbe approchée par interpolation de positions respectives des formes en coupe détectées de la moelle épinière (40) ; et
produire une pluralité de secondes images tomographiques (38) perpendiculaires à la première courbe (46) à partir de l'image médicale tridimensionnelle, **caractérisé par** :
la génération de la première courbe par interpolation de positions respectives (42) des formes en coupe détectées de la moelle épinière (40),
la génération, au moyen d'un générateur d'images, d'une image tridimensionnelle de manière que la première courbe (46) devienne une droite par superposition de secondes images tomographiques de façon à disposer les points d'intersection entre les secondes images tomographiques et la première courbe le long de la droite ;
la détection des formes en coupe de la moelle épinière (40) qui sont incluses dans les secondes images tomographiques ;
exécute le processus itératif qui inclut les étapes consistant à :
déterminer si la génération d'images tomographiques doit ou non être terminée, si la génération d'images tomographiques ne doit pas être terminée, le générateur d'images (32) produit une image tridimensionnelle par interpolation d'images tomographiques produites le plus récemment ;
produire une courbe approchée par interpolation de positions de formes en coupe de la moelle épinière détectées le plus récemment ;
produire une pluralité d'images tomographiques perpendiculaires à la courbe qui a été produite le plus récemment ;
détecter des formes en coupe de la moelle épinière, incluses respectivement dans des images tomographiques produites le plus récemment ; et
retourne à la première étape du processus itératif.

3. Produit-programme informatique qui, lorsqu'il est exécuté, réalise toutes les étapes de la revendication 2.
